# EUROPEAN PATENT SPECIFICATION

(11) **EP 3 985 777 B1**
(45) Date of publication and mention of the grant of the patent: **03.09.2025**
(21) Application number: 20823607.5
(22) Date of filing: 09.06.2020
(51) Int. Cl.: H01M 10/058, H01M 4/38, H01M 4/62, H01M 10/052, H01M 10/0562, H01M 10/0565, H01M 10/0569, H01M 4/46, H01M 4/64, H01M 10/0567

(54) **SECONDARY BATTERY**
SEKUNDÄRBATTERIE
BATTERIE SECONDAIRE

(30) Priority: 13.06.2019 WO PCT/JP2019/023562
(43) Date of publication of application: 20.04.2022
(73) Proprietor: LG Energy Solution, Ltd., Seoul 07335 (KR)
(72) Inventor: ORITA, Akihiro, Tokyo 100-6606 (JP); YOSHINARI, Yasuhiko, Tokyo 100-6606 (JP); OGAWA, Hideyuki, Tokyo 100-6606 (JP); HOSHINO, Minoru, Tokyo 100-6606 (JP); HORIKAWA, Masayo, Tokyo 100-6606 (JP); SERA, Yusuke, Tokyo 100-6606 (JP); UEDA, Suguru, Tokyo 100-6606 (JP); MIKUNI, Hiroki, Tokyo 100-6606 (JP)
(74) Representative: Goddar, Heinz J.
(86) International application number: PCT/JP2020/022705
(87) International publication number: WO 2020/250892

(56) References cited:
- WO-A1-2015/093411
- JP-A- 2002 319 434
- JP-A- 2010 192 255
- JP-A- 2010 192 255
- JP-A- 2011 086 599
- JP-A- 2018 078 103
- JP-A- 2018 078 103
- JP-A- 2018 170 163
- JP-A- 2019 040 676
- KR-A- 20090 063 174
- US-A1- 2017 207 484
- ATETEGEB MEAZAH HAREGEWOIN ET AL: "Electrolyte additives for lithium ion battery electrodes: progress and perspectives", ENERGY & ENVIRONMENTAL SCIENCE, vol. 9, no. 6, 6 May 2016 (2016-05-06), Cambridge, pages 1955 - 1988, XP055534654, ISSN: 1754-5692, DOI: 10.1039/C6EE00123H

## Description

### Technical Field

The present invention relates to a secondary battery.

### Background Art

In recent years, according to a spread of portable electronic devices, electric vehicles, and the like, in secondary batteries typified by lithium ion secondary batteries, further improvement in performance is required. For example, Patent Literature 1 discloses a lithium ion secondary battery capable of attaining good cycle characteristics, in which the lithium ion secondary battery includes a negative electrode containing a silicon material that is a high-capacity negative electrode active material.

### Citation List

### Patent Literature

Patent Literature 1: WO 2018/221346

### Summary of Invention

### Technical Problem

However, in the case of using the negative electrode active material containing silicon as a constituent element, as also described in Patent Literature 1, since expansion and contraction of the negative electrode active material attributable to charging and discharging of the secondary battery are large, the micronization (collapse) of the negative electrode active material is likely to occur. Furthermore, also in the case of using the negative electrode active material containing tin or aluminum as a constituent element, the same phenomenon is likely to occur. As a result, the negative electrode active material is dropped out from the negative electrode, and the discharge capacity or the like of the secondary battery may be decreased.

One aspect of the present invention aims at suppressing a decrease in discharge capacity in a secondary battery using a negative electrode active material containing silicon, tin, or aluminum as a constituent element.

### Solution to Problem

The secondary battery according to the invention is specified in claim 1. The secondary battery includes: a positive electrode current collector; a negative electrode current collector; an electrolyte layer disposed between the positive electrode current collector and the negative electrode current collector; a positive electrode electrolytic solution filling part partitioned by the positive electrode current collector and the electrolyte layer; and a negative electrode electrolytic solution filling part partitioned by the negative electrode current collector and the electrolyte layer, wherein the negative electrode electrolytic solution filling part includes: a conductive member having a mesh structure and disposed so as to bring the negative electrode current collector and the electrolyte layer into conduction; a negative electrode active material retained in the conductive member; an electrolyte salt; and a non-aqueous solvent dissolving the electrolyte salt, and the negative electrode active material contains at least one selected from the group consisting of silicon, tin, and aluminum, as a constituent element.

In this secondary battery, while the conductive member secures conduction between the negative electrode current collector and the electrolyte layer, in the negative electrode electrolytic solution filling part, the negative electrode active material coexists with the negative electrode electrolytic solution in a state of being retained in the conductive member, and thereby this secondary battery functions as a secondary battery. Then, in this secondary battery, since the negative electrode active material is retained in the conductive member, even in a case where the negative electrode active material containing silicon, tin, or aluminum as a constituent element is micronized by charging and discharging of the secondary battery, the negative electrode active material is easily captured by the mesh structure of the conductive member, and subsequently, this negative electrode active material may function as a negative electrode active material. Therefore, in this secondary battery, as compared to a conventional secondary battery in which the negative electrode active material is retained on the negative electrode current collector, a decrease in discharge capacity caused by the micronization of the negative electrode active material can be suppressed.

In addition, since this secondary battery is provided with the positive electrode electrolytic solution filling part and the negative electrode electrolytic solution filling part separately, electrolytic solutions having compositions suitable for respective electrodes can be separately used as the positive electrode electrolytic solution and the negative electrode electrolytic solution. Therefore, as compared to a conventional secondary battery using a common electrolytic solution in the positive electrode and the negative electrode, the performance of the secondary battery can be improved.

The conductive member may be formed of a carbon material.

The non-aqueous solvent may contain 10% by mass or more of fluoroethylene carbonate on a basis of a total amount of the non-aqueous solvent and may be composed only of fluoroethylene carbonate.

The non-aqueous solvent may contain 10% by mass or more of vinylene carbonate on a basis of a total amount of the non-aqueous solvent and may be composed only of vinylene carbonate.

The non-aqueous solvent may contain 10% by mass or more of at least one selected from the group consisting of 12-crown-4, 18-crown-6, 1,2-dimethoxyethane, tetraethylene glycol dimethyl ether, γ-butyrolactone, 1-methyl-2-pyrrolidinone, ethyl heptanoate, tetrahydrofuran, ethylene glycol bis(propionitrile)ether, 2-(methylamino)ethanol, and diaminohexane, on a basis of a total amount of the non-aqueous solvent, and may be composed only of the at least one.

The negative electrode active material may contain 10% by mass or more of silicon on a basis of a total amount of the negative electrode active material, as a constituent element. The negative electrode active material may contain 10% by mass or more of tin on a basis of a total amount of the negative electrode active material, as a constituent element. The negative electrode active material may contain 10% by mass or more of aluminum on a basis of a total amount of the negative electrode active material, as a constituent element.

The positive electrode electrolytic solution filling part may include: a conductive member having a mesh structure and disposed so as to bring the positive electrode current collector and the electrolyte layer into conduction; a positive electrode active material retained in the conductive member; an electrolyte salt; and a non-aqueous solvent dissolving the electrolyte salt.

The non-aqueous solvent contained in the positive electrode electrolytic solution filling is a non-aqueous solvent that is different from the non-aqueous solvent contained in the negative electrode electrolytic solution filling part.

A content of fluoroethylene carbonate in the positive electrode electrolytic solution filling part may be 0.1% by mass or less on a basis of a total amount of the non-aqueous solvent contained in the positive electrode electrolytic solution filling part. The positive electrode electrolytic solution filling part may not contain fluoroethylene carbonate.

A content of vinylene carbonate in the positive electrode electrolytic solution filling part may be 0.1% by mass or less on a basis of a total amount of the non-aqueous solvent contained in the positive electrode electrolytic solution filling part. The positive electrode electrolytic solution filling part may not contain vinylene carbonate.

### Advantageous Effects of Invention

According to an aspect of the present invention, in a secondary battery using a negative electrode active material containing silicon, tin, or aluminum as a constituent element, a decrease in discharge capacity can be suppressed.

### Brief Description of Drawings

FIG. 1 is a perspective view illustrating a secondary battery according to an embodiment.
FIG. 2 is a cross-sectional view taken along line II-II in FIG. 1. FIG. 2(a) is a schematic cross-sectional view illustrating an embodiment of the secondary battery, and FIG. 2(b) is a schematic cross-sectional view illustrating another embodiment of the secondary battery.

### Description of Embodiments

Hereinafter, embodiments of the present invention will be described with reference to the drawings as appropriate. However, the present invention is not limited to the embodiments described below.

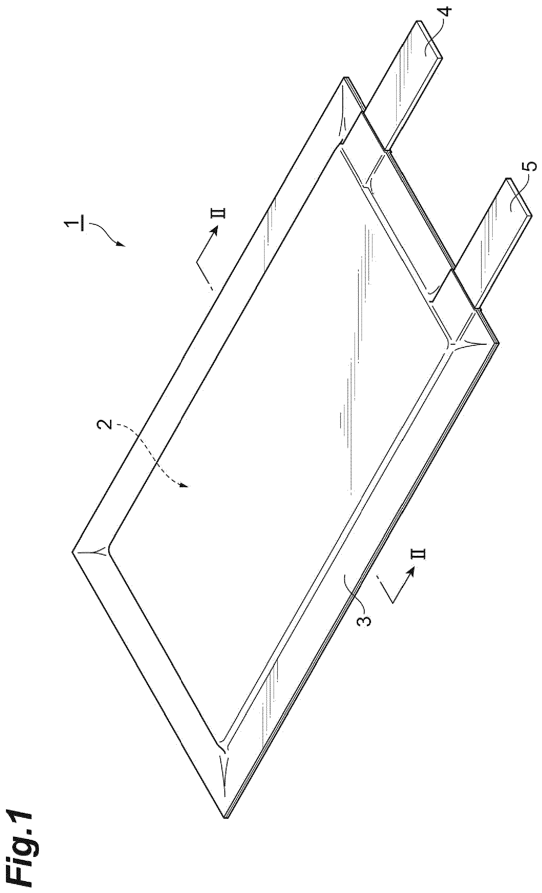

FIG. 1 is a perspective view illustrating a secondary battery according to an embodiment. As illustrated in FIG. 1, a secondary battery 1 according to an embodiment is a so-called laminate type secondary battery that includes an electrode group 2 and a pouch-shaped battery outer casing body 3 accommodating the electrode group 2. A positive electrode current collector tab 4 and a negative electrode current collector tab 5 are provided in the electrode group 2. The positive electrode current collector tab 4 and the negative electrode current collector tab 5 protrude from the inside of the battery outer casing body 3 to the outside so that each of a positive electrode current collector and a negative electrode current collector (details thereof will be described below) can be electrically connected to the outside of the secondary battery 1. In another embodiment, the secondary battery 1 may be a secondary battery having a shape (a coin shape, a cylindrical shape, or the like) other than the laminate type.

The battery outer casing body 3 may be, for example, a container formed of a laminate film. The laminate film may be, for example, a laminate film in which a polymer film such as a polyethylene terephthalate (PET) film, a metallic foil such as aluminum, copper, or stainless steel, and a sealant layer such as polypropylene are laminated in this order.

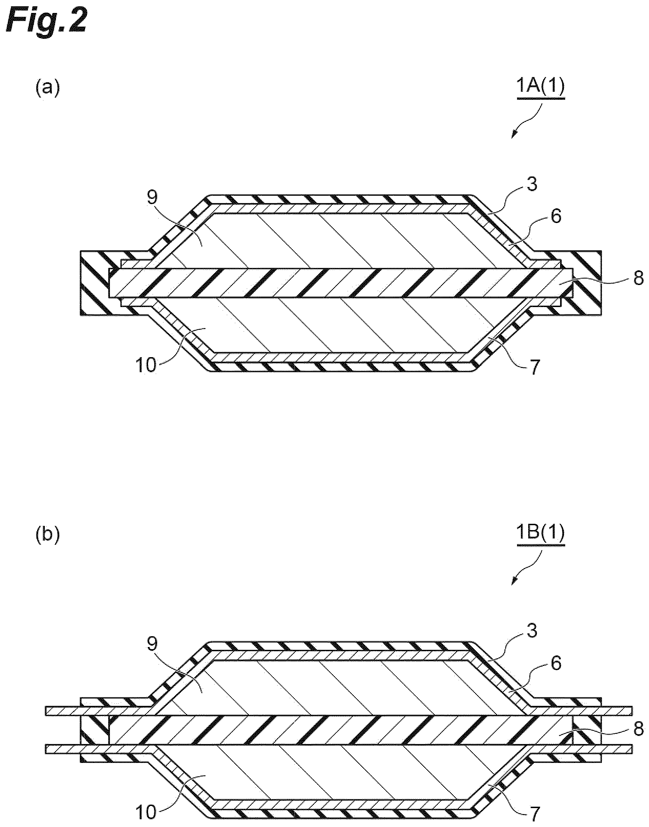

FIG. 2 is a cross-sectional view taken along line II-II in FIG. 1. As illustrated in FIG. 2, the secondary battery 1 includes: in the battery outer casing body 3, a positive electrode current collector 6; a negative electrode current collector 7; an electrolyte layer 8 disposed between the positive electrode current collector 6 and the negative electrode current collector 7; a positive electrode electrolytic solution filling part 9 partitioned by the positive electrode current collector 6 and the electrolyte layer 8; and a negative electrode electrolytic solution filling part 10 partitioned by the negative electrode current collector 7 and the electrolyte layer 8.

The battery outer casing body 3 is sealed so that the positive electrode electrolytic solution and the negative electrode electrolytic solution are not caused to leak out from the positive electrode electrolytic solution filling part 9 and the negative electrode electrolytic solution filling part 10, respectively. In an embodiment, as illustrated in FIG. 2(a), the entirety of the positive electrode current collector 6 and the negative electrode current collector 7 may be accommodated inside the battery outer casing body 3. In another embodiment, as illustrated in FIG. 2(b), both end portions of the positive electrode current collector 6 and the negative electrode current collector 7 may protrude to the outside of the battery outer casing body 3.

The positive electrode current collector 6 is formed, for example, of aluminum, titanium, stainless steel, nickel, baked carbon, an electrically conductive polymer, electrically conductive glass, or the like. The thickness of the positive electrode current collector 6 may be 1 µm or more and may be 50 µm or less, for example.

The negative electrode current collector 7 is formed, for example, of copper, stainless steel, nickel, aluminum, titanium, baked carbon, an electrically conductive polymer, electrically conductive glass, an aluminum-cadmium alloy, or the like. The thickness of the negative electrode current collector 7 may be 1 µm or more and may be 50 µm or less, for example.

The electrolyte layer 8 is a layer that allows cations derived from the electrolyte salt (for example, lithium cations) contained in the positive electrode electrolytic solution filling part 9 and the negative electrode electrolytic solution filling part 10 to pass through the layer and does not allow active materials (the positive electrode active material and the negative electrode active material) and components other than the cations (for example, the above-described non-aqueous solvent) contained in the positive electrode electrolytic solution filling part 9 and the negative electrode electrolytic solution filling part 10 to pass through the layer. The electrolyte layer 8 may be, for example, an electrolyte layer 8 that is non-porous (the electrolyte layer 8 having no pores). The thickness of the electrolyte layer 8 is preferably 1 µm or more from the viewpoint of obtaining superior strength, and is preferably 500 µm or less from the viewpoint that the resistance of ion conduction in the electrolyte layer 8 is reduced, and as a result, the resistance of the secondary battery 1 can be reduced.

Such an electrolyte layer 8 may be a solid electrolyte material showing lithium ion conductivity, may be formed of, for example, an oxide-based solid electrolyte, and may be formed of a polymer. In an embodiment, the electrolyte layer 8 may be, for example, a perfluorosulfonic acid-based ion-exchange membrane. The perfluorosulfonic acid-based ion-exchange membrane is, for example, composed of a polymer having a structural unit represented by Formula (1) below. 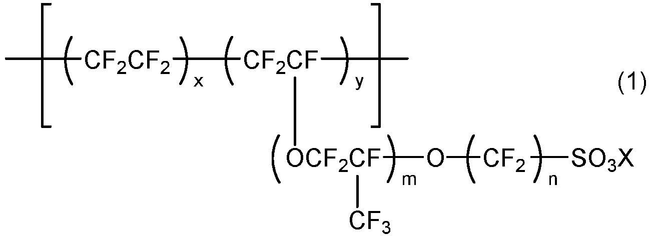 [In the formula, x, y, m, and n represent an integer of 1 to 20, an integer of 1 to 1000, an integer of 0 or 1, and an integer of 1 to 10, respectively, and X represents a hydrogen atom, an alkali metal atom, or an alkali earth metal atom.]

Such a polymer can be synthesized, for example, by a known method and can also be purchased as Nafion (registered trademark, manufactured by DowDuPont, Inc.), Dow Film (manufactured by DowDuPont, Inc.), Aciplex (registered trademark, manufactured by Asahi Kasei Corp.), or Flemion (registered trademark, manufactured by AGC Inc.).

In another embodiment, the polymer constituting the electrolyte layer 8 may be, for example, polyvinyl alcohol, polyacrylamide, polyvinylpyrrolidone, polyethylene oxide, polyacrylic acid, polymethacrylic acid, sulfonated polyimide, sulfonated poly(etheretherketone), sulfonated poly(ether sulfone), or sulfonated poly(p-phenylene). These polymers are preferably ion-exchanged for use.

In the positive electrode electrolytic solution filling part 9, a conductive member is disposed so as to bring the positive electrode current collector 6 and the electrolyte layer 8 into conduction. The conductive member has a mesh structure. The conductive member may be provided in a part of the positive electrode electrolytic solution filling part 9 or may be provided to embed the whole positive electrode electrolytic solution filling part 9. The thickness of the positive electrode electrolytic solution filling part 9 may be 5 µm or more and may be 2000 µm or less, for example.

The conductive member may have, for example, a sheet shape. The conductive member is formed of an electrically conductive material. Examples of the electrically conductive material include a carbon material, a metal material, and an electrically conductive polymer material.

Examples of the carbon material include carbon black, graphite, soft carbon, hard carbon, carbon nanotube, carbon nanofiber, graphene, carbon nanohorn, glassy carbon, and expanded graphite.

Examples of the metal material include nickel, aluminum, copper, stainless steel, gold, and silver.

Examples of the electrically conductive polymer material include materials with which polymer compounds such as polyacetylene, poly(p-phenylenevinylene), polypyrrole, polythiophene, polyaniline, and poly(p-phenylenesulfide) are doped. The doping method is not particularly limited, but may be a method of adding a compound of an electron acceptor (acceptor) such as iodine or arsenic pentafluoride, an electron donor (donor) such as an alkali metal, or the like to the polymer compound.

In an embodiment, a member formed in a mesh structure in advance may be used as the conductive member. Examples of such a conductive member include a conductive member formed of a carbon material such as carbon felt, carbon paper, or carbon cloth and a conductive member formed of a metal material such as punching metal (a metal plate in which a mesh structure is formed by punching).

The positive electrode electrolytic solution filling part 9 contains a positive electrode electrolytic solution, and specifically contains a positive electrode active material, an electrolyte salt, and a non-aqueous solvent.

In the positive electrode electrolytic solution filling part 9, the positive electrode active material preferably exists in a state of being dispersed in the positive electrode electrolytic solution (a non-aqueous solvent). In other words, the positive electrode active material is not retained (fixed) in the positive electrode current collector 6, and the positive electrode electrolytic solution filling part 9 preferably does not contain a binder for retaining (fixing) the positive electrode active material in the positive electrode current collector 6.

The positive electrode active material is a lithium oxide. Examples of the lithium oxide include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, and LiₓMn_{2-y}M_{y}O₄ (in each formula, M represents at least one element selected from the group consisting of Na, Mg, Sc, Y, Mn, Fe, Co, Cu, Zn, Al, Cr, Pb, Sb, V, and B (provided that, M is an element different from other elements in each formula); and x = 0 to 1.2, y = 0 to 0.9, and z = 2.0 to 2.3). The lithium oxide represented by LiₓNi_{1-y}M_{y}O_{z} may be LiₓNi_{1-(y1+y2)}Co_{y1}Mn_{y2}O_{z} (provided that, x and z are the same as those described above, y1 = 0 to 0.9, y2 = 0 to 0.9, and y1 + y2 = 0 to 0.9) and may be, for example, LiNi_{1/3}Co_{1/3}Mn_{1/3}O₂, LiNi_{0.5}Co_{0.2}Mn_{0.3}O₂, LiNi_{0.6}Co_{0.2}Mn_{0.2}O₂, or LiNi_{0.8}Co_{0.1}Mn_{0.1}O₂. The lithium oxide represented by LiₓNi_{1-y}M_{y}O_{z} may be LiₓNi_{1-(y3+y4)}Co_{y3}Al_{y4}O_{z} (provided that, x and z are the same as those described above, y3 = 0 to 0.9, y4 = 0 to 0.9, and y3 + y4 = 0 to 0.9), and may be, for example, LiNi_{0.8}Co_{0.15}Al_{0.05}O₂.

The positive electrode active material is a phosphoric salt of lithium. Examples of the phosphoric salt of lithium include lithium manganese phosphate (LiMnPO₄), lithium iron phosphate (LiFePO₄), lithium cobalt phosphate (LiCoPO₄), and lithium vanadium phosphate (Li₃V₂(PO₄)₃).

A content of the positive electrode active material may be 10 parts by mass or more and may be 80 parts by mass or less, with respect to 100 parts by mass of a total mass of the positive electrode active material, the non-aqueous solvent, and the conductive member contained in the positive electrode electrolytic solution filling part 9.

The electrolyte salt may be, for example, a lithium salt. The lithium salt may be, for example, at least one selected from the group consisting of LiPF₆, LiBF₄, LiClO₄, LiB(C₆H₅)₄, LiCH₃SO₃, CF₃SO₂OLi, LiN(SO₂F)₂ (Li[FSI], lithium bisfluorosulfonyl imide), LiN(SO₂CF₃)₂ (Li[TFSI], lithium bistrifluoromethanesulfonyl imide), and LiN(SO₂CF₂CF₃)₂.

A content of the electrolyte salt may be 0.5 mol/L or more, 0.7 mol/L or more, or 0.8 mol/L or more, and may be 1.5 mol/L or less, 1.3 mol/L or less, or 1.2 mol/L or less, on a basis of a total amount of the non-aqueous solvent.

The non-aqueous solvent is a solvent that can dissolve an electrolyte salt contained in the positive electrode electrolytic solution filling part 9. Examples of the non-aqueous solvent include a non-aqueous solvent that can be suitably used in both the positive electrode electrolytic solution and the negative electrode electrolytic solution, and a non-aqueous solvent that can be suitably used only in the positive electrode electrolytic solution (that is not suitable for the negative electrode electrolytic solution). The non-aqueous solvent is used singly or in combination of two or more types thereof.

The non-aqueous solvent that can be suitably used in both the positive electrode electrolytic solution and the negative electrode electrolytic solution may be, for example, an aprotic solvent that is suitable for both the positive electrode electrolytic solution and the negative electrode electrolytic solution. Examples of such an aprotic solvent include diethyl carbonate, dimethyl ether, diethyl ether, dioxolane, 4-methyl dioxolane, sulfolane, dimethyl sulfoxide, propionitrile, benzonitrile, N,N-dimethylacetamide, and diethylene glycol.

The non-aqueous solvent that can be suitably used only in the positive electrode electrolytic solution (that is not suitable for the negative electrode electrolytic solution) may be a solvent that is excellent in oxidation resistance but is not excellent in reduction resistance (when the solvent is contained in the negative electrode electrolytic solution, decomposition is promoted, and thus the film resistance is increased).

Such a solvent include ethylene carbonate, hexafluoroisopropyl-ethylene carbonate, trans-difluoroethylene carbonate, cis-difluoroethylene carbonate, trishexafluoroisopropyl phosphate, tris(2,2,2-trifluoroethyl)phosphate, 1,1,2,2-tetrafluoroethyl-2,2,3,3-tetrafluoropropyl ether, acetonitrile, succinonitrile, glutaronitrile, adiponitrile, chloroethylene carbonate, and nitromethane. Among these, the non-aqueous solvent that are suitably used only in the positive electrode electrolytic solution (that is not suitable for the negative electrode electrolytic solution) are at least one selected from the group consisting of tris(2,2,2-trifluoroethyl)phosphate, acetonitrile, succinonitrile, adiponitrile, chloroethylene carbonate, nitromethane, and ethylene carbonate.

A content of the non-aqueous solvent that can be suitably used in both the positive electrode electrolytic solution and the negative electrode electrolytic solution may be 1% by mass or more, 3% by mass or more, or 5% by mass or more, and may be 95% by mass or less, 90% by mass or less, or 80% by mass or less, on a basis of a total amount of the non-aqueous solvent contained in the positive electrode electrolytic solution filling part 9. A content of the non-aqueous solvent that can be suitably used only in the positive electrode electrolytic solution (that is not suitable for the negative electrode electrolytic solution) may be 0.1% by mass or more, 1% by mass or more, 10% by mass or more, 15% by mass or more, or 20% by mass or more, and may be 100% by mass or less, 95% by mass or less, or 90% by mass or less, on a basis of a total amount of the non-aqueous solvent contained in the positive electrode electrolytic solution filling part 9.

In an embodiment, the positive electrode electrolytic solution filling part 9 may not contain a non-aqueous solvent described below that can be suitably used only in the negative electrode electrolytic solution (that is not suitable for the positive electrode electrolytic solution). In an embodiment, the positive electrode electrolytic solution filling part 9 may not contain fluoroethylene carbonate or may not contain vinylene carbonate, and may not contain at least one selected from the group consisting of 12-crown-4, 18-crown-6, 1,2-dimethoxyethane, tetraethylene glycol dimethyl ether, γ-butyrolactone, 1-methyl-2-pyrrolidinone, ethyl heptanoate, tetrahydrofuran, ethylene glycol bis(propionitrile)ether, 2-(methylamino)ethanol, and diaminohexane. In another embodiment, a content of the non-aqueous solvent that can be suitably used only in the negative electrode electrolytic solution (that is not suitable for the positive electrode electrolytic solution), the fluoroethylene carbonate, the vinylene carbonate, or at least one selected from the group consisting of 12-crown-4, 18-crown-6, 1,2-dimethoxyethane, tetraethylene glycol dimethyl ether, γ-butyrolactone, 1-methyl-2-pyrrolidinone, ethyl heptanoate, tetrahydrofuran, ethylene glycol bis(propionitrile)ether, 2-(methylamino)ethanol, and diaminohexane may be 0.1% by mass or less on a basis of a total amount of the non-aqueous solvent contained in the positive electrode electrolytic solution filling part 9.

As described above, in the secondary battery 1 according to the present embodiment, since the positive electrode electrolytic solution filling part 9 and the negative electrode electrolytic solution filling part 10 are independently provided, in the positive electrode electrolytic solution filling part 9, the non-aqueous solvent that is suitable only for the positive electrode electrolytic solution can be used and the non-aqueous solvent that is suitable only for the negative electrode electrolytic solution may not be used. As a result, properties of the whole secondary battery 1 can be further improved.

The positive electrode electrolytic solution filling part 9 may further include an electrical conducting material. The electrical conducting material may be, for example, a carbon material such as carbon black such as acetylene black or ketjen black, graphite, graphene, carbon nanotube, or carbon nanofiber. These electrical conducting materials may be dispersed in the positive electrode electrolytic solution to form an electron conduction network. The electrical conducting material has preferably a particle shape and more preferably a bulky particle shape. A content of the electrical conducting material may be 5 parts by mass or more and may be 50 parts by mass or less, with respect to 100 parts by mass of a total mass of the positive electrode active material, the non-aqueous solvent, and the conductive member contained in the positive electrode electrolytic solution filling part 9.

In the negative electrode electrolytic solution filling part 10, a conductive member is disposed so as to bring the negative electrode current collector 7 and the electrolyte layer 8 into conduction. The conductive member has a mesh structure. The conductive member may be provided in a part of the negative electrode electrolytic solution filling part 10 or may be provided to embed the whole negative electrode electrolytic solution filling part 10. The thickness of the negative electrode electrolytic solution filling part 10 may be 5 µm or more and may be 2000 µm or less, for example. The conductive member in the negative electrode electrolytic solution filling part 10 may be the same as the material described as the conductive member in the positive electrode electrolytic solution filling part 9.

The negative electrode electrolytic solution filling part 10 includes a negative electrode electrolytic solution, and specifically includes, for example, a negative electrode active material, an electrolyte salt, and a non-aqueous solvent.

In the negative electrode electrolytic solution filling part 10, the negative electrode active material preferably exists in a state of being dispersed in the negative electrode electrolytic solution (a non-aqueous solvent). In other words, the negative electrode active material is not retained (fixed) in the negative electrode current collector 7, and the negative electrode electrolytic solution filling part 10 preferably does not contain a binder for retaining (fixing) the negative electrode active material in the negative electrode current collector 7.

The negative electrode active material contains at least one selected from the group consisting of silicon, tin, and aluminum, as a constituent element. A content of silicon may be 10% by mass or more, 15% by mass or more, or 20% by mass or more, and may be 100% by mass or less, 95% by mass or less, or 90% by mass or less, on a basis of a total amount of the negative electrode active material. A content of tin may be 10% by mass or more, 15% by mass or more, or 20% by mass or more, and may be 100% by mass or less, 95% by mass or less, or 90% by mass or less, on the basis of the total amount of the negative electrode active material. A content of aluminum may be 10% by mass or more, 15% by mass or more, or 20% by mass or more, and may be 100% by mass or less, 95% by mass or less, or 90% by mass or less, on the basis of the total amount of the negative electrode active material.

The negative electrode active material containing silicon as a constituent element may contain an elemental silicon, or may contain a compound containing silicon as a constituent element (silicon-containing compound). The negative electrode active material containing tin as a constituent element may contain an elemental tin, and may contain a compound containing tin as a constituent element (tin-containing compound).

The silicon-containing compound or the tin-containing compound may be, for example, an alloy (a silicon alloy or a tin alloy) containing silicon or tin and at least one selected from the group consisting of nickel, copper, iron, cobalt, manganese, zinc, indium, silver, titanium, germanium, bismuth, antimony, and chromium as a constituent element. The silicon-containing compound or the tin-containing compound may be an oxide, a nitride, or a carbide. Examples of such a silicon-containing compound include a silicon oxide such as SiO, SiO₂, or LiSiO, a silicon nitride such as Si₃N₄ or Si₂N₂O, and a silicon carbide such as SiC. Examples of such a tin-containing compound include a tin oxide such as SnO, SnO₂, or LiSnO.

The negative electrode active material containing aluminum as a constituent element may be, for example, an aluminum alloy such as a lithium aluminum alloy.

A content of the negative electrode active material may be 10 parts by mass or more and may be 80 parts by mass or less, with respect to 100 parts by mass of a total mass of the negative electrode active material, the non-aqueous solvent, and the conductive member contained in the negative electrode electrolytic solution filling part 10.

The electrolyte salt may be, for example, a lithium salt. The lithium salt may be the same as the lithium salt described as the electrolyte salt contained in the positive electrode electrolytic solution filling part 9. A content of the electrolyte salt may be 0.5 mol/L or more, 0.7 mol/L or more, or 0.8 mol/L or more, and may be 5 mol/L or less, 3 mol/L or less, or 2 mol/L or less, on a basis of a total amount of the non-aqueous solvent.

The non-aqueous solvent is a solvent that can dissolve an electrolyte salt contained in the negative electrode electrolytic solution filling part 10. Examples of the non-aqueous solvent include the non-aqueous solvent that can be suitably used in both the positive electrode electrolytic solution and the negative electrode electrolytic solution, and the non-aqueous solvent that can be suitably used only in the positive electrode electrolytic solution (that is not suitable for the negative electrode electrolytic solution) which are mentioned above. The non-aqueous solvent is used singly or in combination of two or more types thereof.

The non-aqueous solvent that can be suitably used only in the negative electrode electrolytic solution (that is not suitable for the positive electrode electrolytic solution) may be a solvent that is excellent in reduction resistance but is not excellent in oxidation resistance (when the solvent is contained in the positive electrode electrolytic solution (particularly, the positive electrode electrolytic solution using a 4-V class positive electrode such as lithium cobaltate as the positive electrode active material), oxidative decomposition is promoted, and thus the resistance is increased).

Examples of the non-aqueous solvent that can be suitably used only in the negative electrode electrolytic solution (that is not suitable for the positive electrode electrolytic solution) include γ-butyrolactone, ethyl acetate, ethyl pentanoate, dimethyl malonate, diethyl malonate, diethyl methylmalonate, diethyl succinate, diethyl glutarate, diethyl azelate, ethyl heptanoate, heptanoic acid, tetrahydrofuran, 1,2-dimethoxyethane, ethyl propyl ether, tetraethylene glycol dimethyl ether, ethylene glycol bis(3-aminopropyl)ether, diethylene glycol bis(3-aminopropyl)ether, ethylene glycol bis(propionitrile)ether, bis[2-(2-methoxyethoxy)ethyl ether], 12-crown-4, 18-crown-6, taurine, N-methyltaurine, 2-(methylamino)ethanol, diaminohexane, methylenebis(2-chloroaniline), 1-methyl-2-pyrrolidinone, 1,3-dimethyl-2-imidazolidinone, N,N-dimethylformacetamide, N-methyl-piperazine, trimethylamine, triethylamine, N,N-dimethylpropylamine, dimethylformamide, diethylformamide, 1,1,3,3-tetramethylurea, N,N-dimethyl-propyleneurea, cyclohexane, piperidine, cyclopentane, decahydronaphthalene, tetrahydronaphthalene, pyrrolidine, quinoline, and 3-pyrroline. Among these, the non-aqueous solvent that can be suitably used only in the negative electrode electrolytic solution (that is not suitable for the positive electrode electrolytic solution) may be at least one selected from the group consisting of 12-crown-4, 18-crown-6, 1,2-dimethoxyethane, tetraethylene glycol dimethyl ether, γ-butyrolactone, 1-methyl-2-pyrrolidinone, ethyl heptanoate, tetrahydrofuran, ethylene glycol bis(propionitrile)ether, 2-(methylamino)ethanol, and diaminohexane.

Furthermore, examples of the non-aqueous solvent that can be suitably used only in the negative electrode electrolytic solution (that is not suitable for the positive electrode electrolytic solution) also include vinylene carbonate, propane sultone, 1,4-butane sultone, 1,3-propene sultone, ethylmethane sultone, ethylene sulfite, trifluoromethane ethylene carbonate, fluorobenzene, and fluoroethylene carbonate. Among these, the non-aqueous solvent that can be suitably used only in the negative electrode electrolytic solution (that is not suitable for the positive electrode electrolytic solution) may be vinylene carbonate or fluoroethylene carbonate.

A content of the non-aqueous solvent that can be suitably used in both the positive electrode electrolytic solution and the negative electrode electrolytic solution may be 1% by mass or more, 3% by mass or more, or 5% by mass or more, and may be 95% by mass or less, 90% by mass or less, or 80% by mass or less, on a basis of a total amount of the non-aqueous solvent contained in the negative electrode electrolytic solution filling part 10. A content of the non-aqueous solvent that can be suitably used only in the negative electrode electrolytic solution (that is not suitable for the positive electrode electrolytic solution) may be 0.1% by mass or more, 1% by mass or more, 10% by mass or more, 15% by mass or more, or 20% by mass or more, and may be 100% by mass or less, 95% by mass or less, or 90% by mass or less, on a basis of a total amount of the non-aqueous solvent contained in the negative electrode electrolytic solution filling part 10.

In an embodiment, from the viewpoint that the generation of a film, which is called a solid-electrolyte-interface (SEI), on the surface of the negative electrode active material can be further suitably suppressed, the non-aqueous solvent may contain 0.1% by mass or more, 1% by mass or more, 10% by mass or more, 15% by mass or more, or 20% by mass or more of vinylene carbonate, on a basis of a total amount of the non-aqueous solvent, and more preferably may be composed only of vinylene carbonate.

In an embodiment, from the viewpoint that the generation and loss of the SEI on the surface of the negative electrode active material can be suitably suppressed, the non-aqueous solvent may contain 0.1% by mass or more, 1% by mass or more, 10% by mass or more, 15% by mass or more, or 20% by mass or more of fluoroethylene carbonate, on a basis of a total amount of the non-aqueous solvent, and more preferably may be composed only of fluoroethylene carbonate.

In an embodiment, from the viewpoint that the generation and loss of the SEI on the surface of the negative electrode active material can be suitably suppressed, the non-aqueous solvent may contain 0.1% by mass or more, 1% by mass or more, 10% by mass or more, 15% by mass or more, or 20% by mass or more of at least one selected from the group consisting of 12-crown-4, 18-crown-6, 1,2-dimethoxyethane, tetraethylene glycol dimethyl ether, γ-butyrolactone, 1-methyl-2-pyrrolidinone, ethyl heptanoate, tetrahydrofuran, ethylene glycol bis(propionitrile)ether, 2-(methylamino)ethanol, and diaminohexane, on a basis of a total amount of the non-aqueous solvent, and more preferably may be composed only of the at least one.

In an embodiment, the negative electrode electrolytic solution filling part 10 may not contain the aforementioned non-aqueous solvent that can be suitably used only in the negative electrode electrolytic solution (that is not suitable for the positive electrode electrolytic solution). In another embodiment, a content of the non-aqueous solvent that can be suitably used only in the negative electrode electrolytic solution (that is not suitable for the positive electrode electrolytic solution) may be 0.1% by mass or less on a basis of a total amount of the non-aqueous solvent contained in the negative electrode electrolytic solution filling part 10.

As described above, in the secondary battery 1 according to the present embodiment, since the positive electrode electrolytic solution filling part 9 and the negative electrode electrolytic solution filling part 10 are independently provided, the negative electrode electrolytic solution filling part 10 may employ the non-aqueous solvent that is suitable only for the positive electrode electrolytic solution and may not employ the non-aqueous solvent that is suitable only for the positive electrode electrolytic solution. As a result, the generation of a film, which is called a SEI, on the surface of the negative electrode active material is suppressed to a minimum. The SEI is a factor that influences the lifetime characteristics of the secondary battery, and the SEI grows during repeating charging and discharging hundreds of times, so that the battery resistance is increased and the initial capacity may not be attained. Therefore, by using the non-aqueous solvent, which can suppress the formation of the SEI, only in the negative electrode electrolytic solution, the reduction resistance of the negative electrode electrolytic solution is improved, and the lifetime of the secondary battery 1 is further improved.

The negative electrode electrolytic solution filling part 10 may further contain an electrical conducting material. The electrical conducting material may be the same as the material described as the electrical conducting material contained in the positive electrode electrolytic solution filling part 9. A content of the electrical conducting material may be 5 parts by mass or more and may be 50 parts by mass or less, with respect to 100 parts by mass of a total mass of the negative electrode active material, the non-aqueous solvent, and the conductive member contained in the negative electrode electrolytic solution filling part 10.

Concerning this secondary battery as described above, while the conductive member secures conduction between the negative electrode current collector 7 and the electrolyte layer 8, in the negative electrode electrolytic solution filling part 10, the negative electrode active material coexists with the negative electrode electrolytic solution in a state of being retained in the conductive member, and thereby this secondary battery functions as a secondary battery. Then, in this secondary battery, since the negative electrode active material is retained in the conductive member, even in a case where the negative electrode active material containing silicon, tin, or aluminum as a constituent element is micronized by charging and discharging of the secondary battery, the negative electrode active material is easily captured by the mesh structure of the conductive member, and subsequently, this negative electrode active material may function as a negative electrode active material.

On the other hand, concerning a conventional secondary battery in which the negative electrode active material is retained on the negative electrode current collector 7, when the negative electrode active material is micronized by charging and discharging of the secondary battery, the negative electrode active material is dropped out from the negative electrode current collector 7, and thus the electrode containing the negative electrode active material cannot function, so that the discharge capacity or the like of the secondary battery may be decreased.

Therefore, in this secondary battery 1, since the negative electrode active material is not fixed to the negative electrode current collector 7 through a binder and is dispersed in the negative electrode electrolytic solution, as compared to the conventional secondary battery in which the negative electrode active material is retained on the negative electrode current collector, a decrease in discharge capacity caused by the micronization of the negative electrode active material can be suppressed.

In addition, since this secondary battery is provided with the positive electrode electrolytic solution filling part 9 and the negative electrode electrolytic solution filling part 10 separately, electrolytic solutions having compositions suitable for respective electrodes can be separately used as the positive electrode electrolytic solution and the negative electrode electrolytic solution. On the other hand, in a conventional secondary battery using the common electrolytic solution in the positive electrode and the negative electrode, for example, in the case of adding a component suitable for the negative electrode to the electrolytic solution, when this component is not suitable for the positive electrode, the addition amount or the like may be restricted so that the performance of the whole secondary battery is not degraded. Therefore, in the secondary battery of the present embodiment in which such a restriction does not occur, as compared to the conventional secondary battery using the common electrolytic solution in the positive electrode and the negative electrode, the performance of the secondary battery can be improved.

### Examples

Hereinafter, the present invention will be described in detail by means of Examples; however, the present invention is not limited to Examples.

### [Example 1]

### (Production of secondary battery)

50 parts by mass of lithium cobaltate and 20 parts by mass of acetylene black were dispersed in 30 parts by mass of acetonitrile (dehydration grade, manufactured by FUJIFILM Wako Pure Chemical Corporation) and 3 parts by mass of LiBF₄ (manufactured by KISHIDA CHEMICAL Co., Ltd.) by a ball mill, thereby producing a positive electrode electrolytic solution. Furthermore, 50 parts by mass of Si (manufactured by Aldrich, Inc., nano silicon (100 nm or less)) and 20 parts by mass of acetylene black were dispersed in 30 parts by mass of 1-methyl-2-pyrrolidinone (dehydration grade, manufactured by FUJIFILM Wako Pure Chemical Corporation) and 3 parts by mass of LiBF₄ while being pulverized by a bead mill, thereby producing a negative electrode electrolytic solution.

An electrolyte layer having a size of 10 cm × 10 cm (manufactured by DowDuPont, Inc., trade name Nafion 212) was prepared, and carbon felt (manufactured by AvCarb Material Solutions, AvCarb G100 Soft Graphite Battery Felt) was disposed as a conductive member on both surfaces of the electrolyte layer. Next, an aluminum foil having a thickness of 20 µm (positive electrode current collector) was disposed on the conductive member of the electrolyte layer on one side and a copper foil having a thickness of 20 µm (negative electrode current collector) was disposed on the conductive member on the other side, thereby obtaining a laminate. Subsequently, the above-described positive electrode electrolytic solution was injected between the positive electrode current collector and the electrolyte layer, the above-described negative electrode electrolytic solution was injected between the negative electrode current collector and the electrolyte layer, and then the laminate was hot-pressed at 40°C. The laminate was covered with an aluminum laminate bag (outer casing body) so that parts of the positive electrode current collector and the negative electrode current collector protruded to the outside and the bag was sealed, thereby obtaining a secondary battery.

### (Evaluation of secondary battery)

The obtained secondary battery was charged at 25°C at a current corresponding to 0.1 C to 4.2 V and then discharged at a current corresponding to 0.1 C to 2.5 V, and an initial (first cycle) discharge capacity X was measured. This cycle of charging and discharging was performed twice, and then a cycle of charging at a current corresponding to 0.5 C and discharging at a current corresponding to 0.5 C was performed 100 times. A discharge capacity Y after 100 cycles was measured and a capacity retention rate (= Y/X × 100 (%)) was calculated to be 91%.

### [Example 2]

### <Example 2-1>

### (Production of secondary battery)

50 parts by mass of LiNi_{0.5}Mn_{1.5}O₂ and 20 parts by mass of acetylene black were dispersed in 30 parts by mass of acetonitrile (dehydration grade) and 3 parts by mass of LiBF₄ (manufactured by KISHIDA CHEMICAL Co., Ltd.) by a ball mill, thereby producing a positive electrode electrolytic solution. Furthermore, 50 parts by mass of Si (manufactured by Aldrich, Inc., nano silicon (100 nm or less)) and 20 parts by mass of acetylene black were dispersed in 30 parts by mass of 1,2-dimethoxyethane (manufactured by KISHIDA CHEMICAL Co., Ltd.) and 3 parts by mass of LiBF₄ while being pulverized by a bead mill, thereby producing a negative electrode electrolytic solution.

Lithium ion conduction glass (manufactured by OHARA INC., LICGC) was prepared as the electrolyte layer. Carbon felt (manufactured by AvCarb Material Solutions, AvCarb G100 Soft Graphite Battery Felt) was disposed as the conductive member on both surfaces of the electrolyte layer. Next, an aluminum foil having a thickness of 20 µm (positive electrode current collector) was disposed on the conductive member of the electrolyte layer on one side and a copper foil having a thickness of 20 µm (negative electrode current collector) was disposed on the conductive member on the other side, thereby obtaining a laminate. Subsequently, the above-described positive electrode electrolytic solution was injected between the positive electrode current collector and the electrolyte layer, the above-described negative electrode electrolytic solution was injected between the negative electrode current collector and the electrolyte layer, and then the laminate was hot-pressed at 40°C. The laminate was covered with an aluminum laminate bag (outer casing body) so that parts of the positive electrode current collector and the negative electrode current collector protruded to the outside, a glass plate was then interposed between both surfaces, and an external pressure of 0.3 MP was applied thereto so as to seal the bag, thereby obtaining a secondary battery.

### (Evaluation of secondary battery)

The obtained secondary battery was charged at 25°C at a current corresponding to 0.1 C to 5.0 V and then discharged at a current corresponding to 0.1 C to 3.0 V, and an initial (first cycle) discharge capacity X was measured. This cycle of charging and discharging was performed twice, and then a cycle of charging at a current corresponding to 0.5 C and discharging at a current corresponding to 0.5 C was performed 100 times. A discharge capacity Y after 100 cycles was measured and a discharge capacity retention rate (= Y/X × 100 (%)) was calculated to be 91%.

### <Examples 2-2 to 2-9>

### (Production of secondary battery and evaluation of secondary battery)

Production of a secondary battery and evaluation of the secondary battery were performed in the same manner as in Example 2-1, except that the solvent of the positive electrode electrolytic solution and the solvent of the negative electrode electrolytic solution were changed to solvents shown in Table 1. Note that, the electrolytic solution solvent was used after being subjected to a dehydration treatment as necessary. Results of the capacity retention rate are shown in Table 1.

**Table 1**

| | Non-aqueous solvent of positive electrode electrolytic solution | Non-aqueous solvent of negative electrode electrolytic solution | Discharge capacity retention rate [%] after 100 cycles |
|---|---|---|---|
| Exam. 2-1 | Acetonitrile | 1,2-Dimethoxyethane | 92 |
| Exam. 2-2 | Tris(2,2,2-trifluoroethyl)phosphate | 12-Crown-4 | 94 |
| Exam. 2-3 | Adiponitrile | 18-Crown-6 | 95 |
| Exam. 2-4 | Chloroethylene carbonate | Bis[2-(2-methoxyethoxy) ethyl ether] | 96 |
| Exam. 2-5 | Nitromethane | Ethyl heptanoate | 90 |
| Exam. 2-6 | Ethylene carbonate | Tetrahydrofuran | 91 |
| Exam. 2-7 | Tris(2,2,2-trifluoroethyl)phosphate | Ethylene glycol bis(propionitrile)ether | 93 |
| Exam. 2-8 | Tris(2,2,2-trifluoroethyl)phosphate | 2-(Methylamino)ethanol | 81 |
| Exam. 2-9 | Tris(2,2,2-trifluoroethyl)phosphate | Diaminohexane | 87 |

From the above description, it was confirmed that the secondary battery according to an aspect of the present invention (the secondary battery using a negative electrode active material containing silicon, tin, or aluminum as a constituent element) can suppress a decrease in discharge capacity.

### Reference Signs List

1: secondary battery, 2: electrode group, 3: battery outer casing body, 4: positive electrode current collector tab, 5: negative electrode current collector tab, 6: positive electrode current collector, 7: negative electrode current collector, 8: electrolyte layer, 9: positive electrode electrolytic solution filling part, 10: negative electrode electrolytic solution filling part.

## Claims

1. A secondary battery comprising:
a positive electrode current collector;
a negative electrode current collector;
an electrolyte layer disposed between the positive electrode current collector and the negative electrode current collector;
a positive electrode electrolytic solution filling part partitioned by the positive electrode current collector and the electrolyte layer; and
a negative electrode electrolytic solution filling part partitioned by the negative electrode current collector and the electrolyte layer,
wherein,
the negative electrode electrolytic solution filling part comprises:
a conductive member having a mesh structure and disposed so as to bring the negative electrode current collector and the electrolyte layer into conduction;
a negative electrode active material retained in the conductive member;
an electrolyte salt; and
a non-aqueous solvent dissolving the electrolyte salt, and
the negative electrode active material comprises at least one selected from the group consisting of silicon, tin, and aluminum, as a constituent element,
wherein,
the positive electrode electrolytic solution filling part comprises:
a conductive member having a mesh structure and disposed so as to bring the positive electrode current collector and the electrolyte layer into conduction;
a positive electrode active material retained in the conductive member;
an electrolyte salt; and
a non-aqueous solvent dissolving the electrolyte salt, and
the positive electrode active material is a lithium oxide or a phosphoric salt of lithium,
wherein,
the non-aqueous solvent contained in the positive electrode electrolytic solution filling part is a non-aqueous solvent that is different from the non-aqueous solvent contained in the negative electrode electrolytic solution filling part;
the non-aqueous solvent comprised by the negative electrode electrolytic solution filling part is at least one selected from the group consisting of γ-butyrolactone, ethyl acetate, ethyl pentanoate, dimethyl malonate, diethyl malonate, diethyl methylmalonate, diethyl succinate, diethyl glutarate, diethyl azelate, ethyl heptanoate, heptanoic acid, tetrahydrofuran, 1,2-dimethoxyethane, ethyl propyl ether, tetraethylene glycol dimethyl ether, ethylene glycol bis(3-aminopropyl)ether, diethylene glycol bis(3-aminopropyl)ether, ethylene glycol bis(propionitrile)ether, bis[2-(2-methoxyethoxy)ethyl ether], 12-crown-4, 18-crown-6, taurine, N-methyltaurine, 2-(methylamino)ethanol, diaminohexane, methylenebis(2-chloroaniline), 1-methyl-2-pyrrolidinone, 1,3-dimethyl-2-imidazolidinone, N,N-dimethylformacetamide, N-methyl-piperazine, trimethylamine, triethylamine, N,N-dimethylpropylamine, dimethylformamide, diethylformamide, 1,1,3,3-tetramethylurea, N,N-dimethyl-propyleneurea, cyclohexane, piperidine, cyclopentane, decahydronaphthalene, tetrahydronaphthalene, pyrrolidine, quinoline, 3-pyrroline, vinylene carbonate, propane sultone, 1,4-butane sultone, 1,3-propene sultone, ethylmethane sultone, ethylene sulfite, trifluoromethane ethylene carbonate, fluorobenzene, and fluoroethylene carbonate; and
the non-aqueous solvent comprised by the positive electrode electrolytic solution filling part is at least one selected from the group consisting of diethyl carbonate, dimethyl ether, diethyl ether, dioxolane, 4-methyl dioxolane, sulfolane, dimethyl sulfoxide, propionitrile, benzonitrile, N,N-dimethylacetamide, diethylene glycol; ethylene carbonate, hexafluoroisopropyl-ethylene carbonate, trans-difluoroethylene carbonate, cis-difluoroethylene carbonate, trishexafluoroisopropyl phosphate, tris(2,2,2-trifluoroethyl)phosphate, 1,1,2,2-tetrafluoroethyl-2,2,3,3-tetrafluoropropyl ether, acetonitrile, succinonitrile, glutaronitrile, adiponitrile, chloroethylene carbonate, and nitromethane.

2. The secondary battery according to claim 1, wherein the conductive member is formed of a carbon material.

3. The secondary battery according to claim 1 or 2, wherein the non-aqueous solvent comprised by the negative electrode electrolytic solution filling part comprises 10% by mass or more of fluoroethylene carbonate on a basis of a total amount of the non-aqueous solvent comprised by the negative electrode electrolytic solution filling part.

4. The secondary battery according to claim 3, wherein the non-aqueous solvent consists of fluoroethylene carbonate.

5. The secondary battery according to claim 1 or 2, wherein the non-aqueous solvent comprised by the negative electrode electrolytic solution filling part comprises 10% by mass or more of vinylene carbonate on a basis of a total amount of the non-aqueous solvent comprised by the negative electrode electrolytic solution filling part.

6. The secondary battery according to claim 5, wherein the non-aqueous solvent consists of vinylene carbonate.

7. The secondary battery according to claim 1 or 2, wherein the non-aqueous solvent comprised by the negative electrode electrolytic solution filling part comprises 10% by mass or more of at least one selected from the group consisting of γ-butyrolactone, ethyl acetate, ethyl pentanoate, dimethyl malonate, diethyl malonate, diethyl methylmalonate, diethyl succinate, diethyl glutarate, diethyl azelate, ethyl heptanoate, heptanoic acid, tetrahydrofuran, 1,2-dimethoxyethane, ethyl propyl ether, tetraethylene glycol dimethyl ether, ethylene glycol bis(3-aminopropyl)ether, diethylene glycol bis(3-aminopropyl)ether, ethylene glycol bis(propionitrile)ether, bis[2-(2-methoxyethoxy)ethyl ether], 12-crown-4, 18-crown-6, taurine, N-methyltaurine, 2-(methylamino)ethanol, diaminohexane, methylenebis(2-chloroaniline), 1-methyl-2-pyrrolidinone, 1,3-dimethyl-2-imidazolidinone, N,N-dimethylformacetamide, N-methyl-piperazine, trimethylamine, triethylamine, N,N-dimethylpropylamine, dimethylformamide, diethylformamide, 1,1,3,3-tetramethylurea, N,N-dimethyl-propyleneurea, cyclohexane, piperidine, cyclopentane, decahydronaphthalene, tetrahydronaphthalene, pyrrolidine, quinoline, and 3-pyrroline, on a basis of a total amount of the non-aqueous solvent comprised by the negative electrode electrolytic solution filling part.

8. The secondary battery according to claim 7, wherein the non-aqueous solvent comprised by the negative electrode electrolytic solution filling part comprises 10% by mass or more of at least one selected from the group consisting of 12-crown-4, 18-crown-6, 1,2-dimethoxyethane, tetraethylene glycol dimethyl ether, γ-butyrolactone, 1-methyl-2-pyrrolidinone, ethyl heptanoate, tetrahydrofuran, ethylene glycol bis(propionitrile)ether, 2-(methylamino)ethanol, and diaminohexane, on a basis of a total amount of the non-aqueous solvent comprised by the negative electrode electrolytic solution filling part.

9. The secondary battery according to any one of claims 1 to 8, wherein the negative electrode active material comprises 10% by mass or more of silicon on a basis of a total amount of the negative electrode active material, as a constituent element.

10. The secondary battery according to any one of claims 1 to 9, wherein the negative electrode active material comprises 10% by mass or more of tin on a basis of a total amount of the negative electrode active material, as a constituent element.

11. The secondary battery according to any one of claims 1 to 10, wherein the negative electrode active material comprises 10% by mass or more of aluminum on a basis of a total amount of the negative electrode active material, as a constituent element.

12. The secondary battery according to any one of claims 1 to 11, wherein a content of fluoroethylene carbonate in the positive electrode electrolytic solution filling part is 0.1% by mass or less on a basis of a total amount of the non-aqueous solvent contained in the positive electrode electrolytic solution filling part.

## Patentansprüche

1. Sekundärbatterie, umfassend:
einen Stromabnehmer der positiven Elektrode;
einen Stromabnehmer der negativen Elektrode;
eine Elektrolytschicht, die zwischen dem Stromabnehmer der positiven Elektrode und dem Stromabnehmer der negativen Elektrode angeordnet ist;
ein Füllteil für die Elektrolytlösung der positiven Elektrode, das durch den Stromabnehmer der positiven Elektrode und die Elektrolytschicht unterteilt ist; und
ein Füllteil für die Elektrolytlösung der negativen Elektrode, das durch den Stromabnehmer der negativen Elektrode und die Elektrolytschicht unterteilt ist,
wobei
das Füllteil für die Elektrolytlösung der negativen Elektrode umfasst:
ein leitfähiges Element, das eine Netzstruktur aufweist und so angeordnet ist, dass es den Stromabnehmer der negativen Elektrode und die Elektrolytschicht in Leitung bringt;
ein aktives Material der negativen Elektrode, das in dem leitfähigen Element gehalten wird;
ein Elektrolytsalz; und
ein nichtwässriges Lösungsmittel, das das Elektrolytsalz löst, und
das aktive Material der negativen Elektrode mindestens eines, ausgewählt aus der Gruppe bestehend aus Silicium, Zinn und Aluminium, als ein konstituierendes Element umfasst,
wobei
das Füllteil für die Elektrolytlösung der positiven Elektrode umfasst:
ein leitfähiges Element, das eine Netzstruktur aufweist und so angeordnet ist, dass es den Stromabnehmer der positiven Elektrode und die Elektrolytschicht in Leitung bringt;
ein aktives Material der positiven Elektrode, das in dem leitfähigen Element gehalten wird;
ein Elektrolytsalz; und
ein nichtwässriges Lösungsmittel, das das Elektrolytsalz löst, und
das aktive Material der positiven Elektrode ein Lithiumoxid oder ein Phosphorsalz von Lithium ist,
wobei
das in dem Füllteil für die Elektrolytlösung der positiven Elektrode enthaltene nichtwässrige Lösungsmittel ein nichtwässriges Lösungsmittel ist, das sich von dem in dem Füllteil für die Elektrolytlösung der negativen Elektrode enthaltenen nichtwässrigen Lösungsmittel unterscheidet;
das in dem Füllteil für die Elektrolytlösung der negativen Elektrode enthaltene nichtwässrige Lösungsmittel mindestens eines, ausgewählt aus der Gruppe bestehend aus γ-Butyrolacton, Ethylacetat, Ethylpentanoat, Dimethylmalonat, Diethylmalonat, Diethylmethylmalonat, Diethylsuccinat, Diethylglutarat, Diethylazelat, Ethylheptanoat, Heptansäure, Tetrahydrofuran, 1,2-Dimethoxyethan, Ethylpropylether, Tetraethylenglycoldimethylether, Ethylenglycolbis(3-aminopropyl)ether, Diethylenglycolbis(3-aminopropyl)ether, Ethylenglycolbis(propionitril)ether, Bis[2-(2-methoxyethoxy)ethylether], 12-Krone-4, 18-Krone-6, Taurin, N-Methyltaurin, 2-(Methylamino)ethanol, Diaminohexan, Methylenbis(2-chloranilin), 1-Methyl-2-pyrrolidinon, 1,3-Dimethyl-2-imidazolidinon, N,N-Dimethylformacetamid, N-Methylpiperazin, Trimethylamin, Triethylamin, N,N-Dimethylpropylamin, Dimethylformamid, Diethylformamid, 1,1,3,3-Tetramethylharnstoff, N,N-Dimethylpropylenharnstoff, Cyclohexan, Piperidin, Cyclopentan, Decahydronaphthalin, Tetrahydronaphthalin, Pyrrolidin, Chinolin, 3-Pyrrolin, Vinylencarbonat, Propansulton, 1,4-Butansulton, 1,3-Propensulton, Ethylmethansulton, Ethylensulfit, Trifluormethanethylencarbonat, Fluorbenzol und Fluorethylencarbonat, ist; und
das in dem Füllteil für die Elektrolytlösung der positiven Elektrode enthaltene nichtwässrige Lösungsmittel mindestens eines, ausgewählt aus der Gruppe bestehend aus Diethylcarbonat, Dimethylether, Diethylether, Dioxolan, 4-Methyldioxolan, Sulfolan, Dimethylsulfoxid, Propionitril, Benzonitril, N,N-Dimethylacetamid, Diethylenglycol, Ethylencarbonat, Hexafluorisopropylethylencarbonat, trans-Difluorethylencarbonat, cis-Difluorethylencarbonat, Trishexafluorisopropylphosphat, Tris(2,2,2-trifluorethyl)phosphat, 1,1,2,2-Tetrafluorethyl-2,2,3,3-tetrafluorpropylether, Acetonitril, Succinonitril, Glutaronitril, Adiponitril, Chlorethylencarbonat und Nitromethan, ist.

2. Sekundärbatterie nach Anspruch 1, wobei das leitfähige Element aus einem Kohlenstoffmaterial gebildet ist.

3. Sekundärbatterie nach Anspruch 1 oder 2, wobei das in dem Füllteil für die Elektrolytlösung der negativen Elektrode enthaltene nichtwässrige Lösungsmittel 10 Massen-% oder mehr Fluorethylencarbonat auf Basis einer Gesamtmenge des in dem Füllteil für die Elektrolytlösung der negativen Elektrode enthaltenen nichtwässrigen Lösungsmittels umfasst.

4. Sekundärbatterie nach Anspruch 3, wobei das nichtwässrige Lösungsmittel aus Fluorethylencarbonat besteht.

5. Sekundärbatterie nach Anspruch 1 oder 2, wobei das in dem Füllteil für die Elektrolytlösung der negativen Elektrode enthaltene nichtwässrige Lösungsmittel 10 Massen-% oder mehr Vinylencarbonat auf Basis einer Gesamtmenge des in dem Füllteil für die Elektrolytlösung der negativen Elektrode enthaltenen nichtwässrigen Lösungsmittels umfasst.

6. Sekundärbatterie nach Anspruch 5, wobei das nichtwässrige Lösungsmittel aus Vinylencarbonat besteht.

7. Sekundärbatterie nach Anspruch 1 oder 2, wobei das in dem Füllteil für die Elektrolytlösung der negativen Elektrode enthaltene nichtwässrige Lösungsmittel 10 Massen-% oder mehr von mindestens einem, ausgewählt aus der Gruppe bestehend aus γ-Butyrolacton, Ethylacetat, Ethylpentanoat, Dimethylmalonat, Diethylmalonat, Diethylmethylmalonat, Diethylsuccinat, Diethylglutarat, Diethylazelat, Ethylheptanoat, Heptansäure, Tetrahydrofuran, 1,2-Dimethoxyethan, Ethylpropylether, Tetraethylenglycoldimethylether, Ethylenglycolbis(3-aminopropyl)ether, Diethylenglycolbis(3-aminopropyl)ether, Ethylenglycolbis(propionitril)ether, Bis[2-(2-methoxyethoxy)ethylether], 12-Krone-4, 18-Krone-6, Taurin, N-Methyltaurin, 2-(Methylamino)ethanol, Diaminohexan, Methylenbis(2-chloranilin), 1-Methyl-2-pyrrolidinon, 1,3-Dimethyl-2-imidazolidinon, N,N-Dimethylformacetamid, N-Methylpiperazin, Trimethylamin, Triethylamin, N,N-Dimethylpropylamin, Dimethylformamid, Diethylformamid, 1,1,3,3-Tetramethylharnstoff, N,N-Dimethylpropylenharnstoff, Cyclohexan, Piperidin, Cyclopentan, Decahydronaphthalin, Tetrahydronaphthalin, Pyrrolidin, Chinolin und 3-Pyrrolin, auf Basis einer Gesamtmenge des in dem Füllteil für die Elektrolytlösung der negativen Elektrode enthaltenen nichtwässrigen Lösungsmittels umfasst.

8. Sekundärbatterie nach Anspruch 7, wobei das in dem Füllteil für die Elektrolytlösung der negativen Elektrode enthaltene nichtwässrige Lösungsmittel 10 Massen-% oder mehr von mindestens einem, ausgewählt aus der Gruppe bestehend aus 12-Krone-4, 18-Krone-6, 1,2-Dimethoxyethan, Tetraethylenglycoldimethylether, γ-Butyrolacton, 1-Methyl-2-pyrrolidinon, Ethylheptanoat, Tetrahydrofuran, Ethylenglycolbis(propionitril)ether, 2-(Methylamino)ethanol und Diaminohexan, auf Basis einer Gesamtmenge des in dem Füllteil für die Elektrolytlösung der negativen Elektrode enthaltenen nichtwässrigen Lösungsmittels umfasst.

9. Sekundärbatterie nach einem der Ansprüche 1 bis 8, wobei das aktive Material der negativen Elektrode 10 Massen-% oder mehr Silicium auf Basis einer Gesamtmenge des aktiven Materials der negativen Elektrode als ein konstituierendes Element umfasst.

10. Sekundärbatterie nach einem der Ansprüche 1 bis 9, wobei das aktive Material der negativen Elektrode 10 Massen-% oder mehr Zinn auf Basis einer Gesamtmenge des aktiven Materials der negativen Elektrode als ein konstituierendes Element umfasst.

11. Sekundärbatterie nach einem der Ansprüche 1 bis 10, wobei das aktive Material der negativen Elektrode 10 Massen-% oder mehr Aluminium auf Basis einer Gesamtmenge des aktiven Materials der negativen Elektrode als ein konstituierendes Element umfasst.

12. Sekundärbatterie nach einem der Ansprüche 1 bis 11, wobei ein Gehalt an Fluorethylencarbonat in dem Füllteil für die Elektrolytlösung der positiven Elektrode 0,1 Massen-% oder weniger auf Basis einer Gesamtmenge des in dem Füllteil für die Elektrolytlösung der positiven Elektrode enthaltenen nichtwässrigen Lösungsmittels beträgt.

## Revendications

1. Batterie rechargeable comprenant :
un collecteur de courant d'électrode positive ;
un collecteur de courant d'électrode négative ;
une couche d'électrolyte disposée entre le collecteur de courant d'électrode positive et le collecteur de courant d'électrode négative ;
une partie remplissage de solution électrolytique d'électrode positive divisée par le collecteur de courant d'électrode positive et la couche d'électrolyte ; et
une partie remplissage de solution électrolytique d'électrode négative divisée par le collecteur de courant d'électrode négative et la couche d'électrolyte,
dans laquelle,
la partie remplissage de solution électrolytique d'électrode négative comprend :
un élément conducteur ayant une structure de maillage et disposé de façon à mettre le collecteur de courant d'électrode négative et la couche d'électrolyte en conduction ;
un matériau actif d'électrode négative retenu dans l'élément conducteur ;
un sel d'électrolyte ; et
un solvant non aqueux dissolvant le sel d'électrolyte, et
le matériau actif d'électrode négative comprend un ou plusieurs éléments sélectionnés dans le groupe constitué de silicium, étain et aluminium, en tant qu'élément constituant,
dans laquelle,
la partie remplissage de solution électrolytique d'électrode positive comprend :
un élément conducteur ayant une structure de maillage et disposé de façon à mettre le collecteur de courant d'électrode positive et la couche d'électrolyte en conduction ;
un matériau actif d'électrode positive retenu dans l'élément conducteur ;
un sel d'électrolyte ; et
un solvant non aqueux dissolvant le sel d'électrolyte, et
le matériau actif d'électrode positive est un oxyde de lithium ou un sel phosphorique de lithium,
dans laquelle,
le solvant non aqueux contenu dans la partie remplissage de solution électrolytique d'électrode positive est un solvant non aqueux qui est différent du solvant non aqueux contenu dans la partie remplissage de solution électrolytique d'électrode négative ;
le solvant non aqueux compris par la partie remplissage de solution électrolytique d'électrode négative est un ou plusieurs éléments sélectionnés dans le groupe constitué de γ-butyrolactone, acétate d'éthyle, pentanoate d'éthyle, malonate de diméthyle, malonate de diéthyle, méthylmalonate de diéthyle, succinate de diéthyle, glutarate de diéthyle, azélate de diéthyle, heptanoate d'éthyle, acide heptanoïque, tétrahydrofurane, 1,2-diméthoxyéthane, éther éthylpropylique, éther diméthylique de tétraéthylène glycol, éther bis(3-aminopropyl) d'éthylène glycol, éther bis(3-aminopropyl) de diéthylène glycol, éther bis(propionitrile) d'éthylène glycol, bis[2-(2-méthoxyéthoxy)éthyl éther], 12-couronne-4, 18-couronne-6, taurine, N-méthyltaurine, 2-(méthylamino)éthanol, diaminohexane, méthylènebis(2-chloroaniline), 1-méthyl-2-pyrrolidinone, 1,3-diméthyl-2-imidazolidinone, N,N-diméthylformacétamide, N-méthyl-pipérazine, triméthylamine, triéthylamine, N,N-diméthylpropylamine, diméthylformamide, diéthylformamide, 1,1,3,3-tétraméthylurée, N,N'-diméthylpropylèneurée, cyclohexane, pipéridine, cyclopentane, décahydronaphtalène, tétrahydronaphtalène, pyrrolidine, quinoline, 3-pyrroline, carbonate de vinylène, propane sultone, 1,4-butane sultone, 1,3-propène sultone, éthylméthane sultone, éthylène sulfite, carbonate d'éthylène trifluorométhane, fluorobenzène et carbonate de fluoroéthylène ; et
le solvant non aqueux compris par la partie remplissage de solution électrolytique d'électrode positive est un ou plusieurs éléments sélectionnés dans le groupe constitué de carbonate de diéthyle, éther diméthylique, éther diéthylique, dioxolane, 4-méthyldioxolane, sulfolane, diméthylsulfoxyde, propionitrile, benzonitrile, N,N-diméthylacétamide, diéthylène glycol ; carbonate d'éthylène, hexafluoroisopropyl-carbonate d'éthylène, trans-dicarbonate de fluoroéthylène, cis-dicarbonate de fluoroéthylène, phosphate de tris(hexafluoroisopropyl), phosphate de tris(2,2,2-trifluoroéthyl), éther de 1,1,2,2-tétrafluoroéthyle-2,2,3,3-tétrafluoropropyle, acétonitrile, succinonitrile, glutaronitrile, adiponitrile, chlorocarbonate d'éthylène et nitrométhane.

2. Batterie rechargeable selon la revendication 1, dans laquelle l'élément conducteur est formé d'un matériau de carbone.

3. Batterie rechargeable selon la revendication 1 ou 2, dans laquelle le solvant non aqueux compris par la partie remplissage de solution électrolytique d'électrode négative comprend 10 % en masse ou plus de carbonate de fluoroéthylène sur une base d'une quantité totale du solvant non aqueux compris par la partie remplissage de solution électrolytique d'électrode négative.

4. Batterie rechargeable selon la revendication 3, dans laquelle le solvant non aqueux est constitué de carbonate de fluoroéthylène.

5. Batterie rechargeable selon la revendication 1 ou 2, dans laquelle le solvant non aqueux compris par la partie remplissage de solution électrolytique d'électrode négative comprend 10 % en masse ou plus de carbonate de vinylène sur une base d'une quantité totale du solvant non aqueux compris par la partie remplissage de solution électrolytique d'électrode négative.

6. Batterie rechargeable selon la revendication 5, dans laquelle le solvant non aqueux est constitué de carbonate de vinylène.

7. Batterie rechargeable selon la revendication 1 ou 2, dans laquelle le solvant non aqueux compris par la partie remplissage de solution électrolytique d'électrode négative comprend 10 % en masse ou plus d'un ou plusieurs éléments sélectionnés dans le groupe constitué de γ-butyrolactone, acétate d'éthyle, pentanoate d'éthyle, malonate de diméthyle, malonate de diéthyle, méthylmalonate de diéthyle, succinate de diéthyle, glutarate de diéthyle, azélate de diéthyle, heptanoate d'éthyle, acide heptanoïque, tétrahydrofurane, 1,2-diméthoxyéthane, éther éthylpropylique, éther diméthylique de tétraéthylène glycol, éther bis(3-aminopropyl) d'éthylène glycol, éther bis(3-aminopropyl) de diéthylène glycol, éther bis(propionitrile) d'éthylène glycol, bis[2-(2-méthoxyéthoxy)éthyl éther], 12-couronne-4, 18-couronne-6, taurine, N-méthyltaurine, 2-(méthylamino)éthanol, diaminohexane, méthylènebis(2-chloroaniline), 1-méthyl-2-pyrrolidinone, 1,3-diméthyl-2-imidazolidinone, N,N-diméthylformacétamide, N-méthyl-pipérazine, triméthylamine, triméthylamine, N,N-diméthylpropylamine, diméthylformamide, diéthylformamide, 1,1,3,3-tétraméthylurée, N,N'-diméthylpropylèneurée, cyclohexane, pipéridine, cyclopentane, décahydronaphtalène, tétrahydronaphtalène, pyrrolidine, quinoline et 3-pyrroline, sur une base d'une quantité totale du solvant non aqueux compris par la partie remplissage de solution électrolytique d'électrode négative.

8. Batterie rechargeable selon la revendication 7, dans laquelle le solvant non aqueux compris par la partie remplissage de solution électrolytique d'électrode négative comprend 10 % en masse ou plus de un ou plusieurs éléments sélectionnés dans le groupe constitué de 12-couronne-4, 18-couronne-6, 1,2-diméthoxyéthane, éther diméthylique de tétraéthylène glycol, γ-butyrolactone, 1-méthyl-2-pyrrolidinone, éthyl heptanoate, tétrahydrofurane, éther bis(propionitrile) d'éthylène glycol, 2-(méthylamino)éthanol et diaminohexane, sur une base d'une quantité totale du solvant non aqueux compris par la partie remplissage de solution électrolytique d'électrode négative.

9. Batterie rechargeable selon l'une quelconque des revendications 1 à 8, dans laquelle le matériau actif d'électrode négative comprend 10 % en masse ou plus de silicium sur une base d'une quantité totale du matériau actif d' électrode négative, en tant qu'élément constituant.

10. Batterie rechargeable selon l'une quelconque des revendications 1 à 9, dans laquelle le matériau actif d'électrode négative comprend 10 % en masse ou plus d'étain sur une base d'une quantité totale du matériau actif d'électrode négative, en tant qu'élément constituant.

11. Batterie rechargeable selon l'une quelconque des revendications 1 à 10, dans laquelle le matériau actif d'électrode négative comprend 10 % en masse ou plus d'aluminium sur une base d'une quantité totale du matériau actif d'électrode négative, en tant qu'élément constituant.

12. Batterie rechargeable selon l'une quelconque des revendications 1 à 11, dans laquelle une teneur en carbonate de fluoroéthylène dans la partie remplissage de solution électrolytique d'électrode positive est 0,1 % en masse ou moins sur une base d'une quantité totale du solvant non aqueux contenue dans la partie remplissage de solution électrolytique d'électrode positive.
